# FASCICULE DE BREVET EUROPEEN

(11) **EP 3 233 536 B1**
(45) Date de publication et mention de la délivrance du brevet: **21.11.2018**
(21) Numéro de dépôt: 15804552.6
(22) Date de dépôt: 04.12.2015
(51) Int. Cl.: B60C 15/00, B60C 15/06, B60C 9/02, B60C 15/04

(54) **PNEUMATIQUE COMPORTANT UNE ARMATURE DE CARCASSE FORMEE DE DEUX COUCHES**
REIFEN MIT EINER AUS ZWEI LAGEN BESTEHENDEN KARKASSENVERSTÄRKUNG
TYRE COMPRISING A CARCASS REINFORCEMENT MADE UP OF TWO LAYERS

(30) Priorité: 16.12.2014 FR 1462471
(43) Date de publication de la demande: 25.10.2017
(73) Titulaire: Compagnie Générale des Etablissements Michelin, 63000 Clermont-Ferrand (FR)
(72) Inventeur: FRANCIA, Marc, 63040 Clermont-Ferrand Cedex 9 (FR); POTIN, Yves, 63040 Clermont-Ferrand Cedex 9 (FR); VILCOT, Florian, 63040 Clermont-Ferrand Cedex 9 (FR)
(74) Mandataire: Le Cam, Stéphane Georges Elie
(86) Numéro de dépôt international: PCT/EP2015/078724
(87) Numéro de publication internationale: WO 2016/096491

(56) Documents cités:
- EP-A1- 0 463 273
- EP-A1- 1 792 752
- FR-A1- 2 507 970
- FR-A1- 2 953 459
- US-A- 5 056 575

## Description

La présente invention concerne un pneumatique, à armature de carcasse radiale constituée de deux couches d'éléments de renforcement.

Bien que non limitée à ce type d'applications, l'invention sera plus particulièrement décrite en référence à un pneumatique destiné à équiper des véhicules de type petits poids-lourds (« light truck » en anglais), tels que, par exemple des camions ou des camionnettes.

D'une manière générale dans les pneumatiques de type petit poids-lourds, l'armature de carcasse est ancrée de part et d'autre dans la zone du bourrelet et est surmontée radialement par une armature de sommet.

L'armature de carcasse est usuellement constituée de deux couches constituées d'éléments de renforcement en textile. De manière avantageuse, lorsque les deux couches d'armature de sommet sont retournées autour d'une tringle, les extrémités des retournements de chacune des couches sont radialement décalées pour éviter de trop grandes proximités entre des extrémités de couches d'éléments de renforcement connues pour créer des zones de perturbation au sein des mélanges polymériques.

L'armature de sommet est constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette couche, dite de triangulation, étant radialement située entre l'armature de carcasse et la première couche de sommet dite de travail, formées de fils ou câbles parallèles présentant des angles au plus égaux à 45° en valeur absolue. La couche de triangulation forme avec au moins ladite couche de travail une armature triangulée, qui présente, sous les différentes contraintes qu'elle subit, peu de déformations, la couche de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Le document WO 97/27070 décrit un exemple de pneumatiques pour véhicule petit poids-lourds dont l'armature de carcasse est constituée de deux couches, chacune étant retournée autour d'une tringle dans chacun des bourrelets. Afin de permettre un décalage radial des extrémités de retournement les semi-finis correspondants à chacun des couches d'armature de carcasse présentent des dimensions différentes. Outre, la nécessité de multiplier les semi-finis, la fabrication d'un tel pneumatique implique un dispositif complexe permettant la pose de deux couches d'armature de carcasse différentes.

Le document EP 1 792 752 décrit un pneumatique pour véhicule petit poids-lourds dont l'armature de carcasse est constituée de deux couches, une seule étant retournée autour d'une tringle dans chacun des bourrelets. La deuxième couche vient couvrir chacun des retournements de la première couche dans les zones des bourrelets. Avec une telle conception, il n'y a pas de problèmes de proximité des extrémités de retournement mais la tenue de la couche d'armature de carcasse axialement la plus extérieure est plus délicate dans certains types d'usage, notamment du fait des charges portées.

Le document WO 97/27070 décrit un pneumatique pour véhicule petit poids-lourds dont l'armature de carcasse est constituée de deux couches associées à une troisième plus courte venant brider l'ensemble sur la tringle nécessitant des couches semi-finis de tailles différentes et un procédé de fabrication relativement complexe.

Un but de l'invention est de fournir des pneumatiques pour véhicules de type "petits Poids-Lourds", allégés par rapport aux pneumatiques usuels tout en assurant des performances des pneumatiques satisfaisantes notamment en termes d'endurance ou bien des pneumatiques pour véhicules de type "petits Poids-Lourds" pouvant être utilisé dans des conditions de roulage particulièrement sévères en termes de surcharge.

Ce but est atteint selon l'invention par un pneumatique pour véhicule de type petit poids lourd, à armature de carcasse radiale, présentant un load index supérieur ou égal à 118, comprenant une armature de sommet, elle-même coiffée radialement d'une bande de roulement, ladite bande de roulement étant réunie à deux bourrelets, comportant une tringle, par l'intermédiaire de deux flancs, ladite armature de carcasse étant constituée de deux couches d'éléments de renforcement textiles, une première couche d'armature de carcasse étant retournée autour de la tringle dans chacun des bourrelets, les extrémités de ladite première couche d'armature de carcasse étant radialement extérieure au point radialement le plus extérieur de la tringle dans chaque bourrelet et la deuxième couche d'armature de carcasse s'étendant d'un bourrelet à l'autre, sans aucun retournement autour de la tringle dans chacun des bourrelets, ses extrémités étant axialement extérieures au point axialement le plus extérieur de la tringle dans chaque bourrelet, ledit pneumatique comprenant dans chaque flanc un premier élément de remplissage, axialement intérieur à la surface extérieur d'un flanc et axialement extérieur au retournement de la première couche d'armature de carcasse, constitué de mélange caoutchouteux présentant un module sécant d'élasticité sous tension à 10 % d'allongement Mj, chaque bourrelet comprenant un deuxième élément de remplissage, constitué de mélange caoutchouteux présentant un module sécant d'élasticité sous tension à 10 % d'allongement Mt, prolongeant radialement vers l'extérieur le noyau tringle, chacune des couches d'armature de carcasse présentant une force rupture par unité de largeur supérieure à 2900 daN/dm, la rigidité minimum par unité de la largeur, mesurée pour un allongement inférieur à 10%, de la deuxième couche d'armature de carcasse étant strictement supérieure à une valeur égale à 20% de la rigidité minimum par unité de largeur, mesurée pour un allongement inférieur à 10%, de la première couche d'armature de carcasse, les éléments de renforcement de la première couche d'armature de carcasse présentant un titre supérieur à 300 tex, les éléments de renforcement des deux couches d'armature de carcasse présentant un titre inférieur à 750 tex, l'allongement sous une force de 20 daN des éléments de renforcement de la deuxième couche d'armature de carcasse étant supérieure à 8% et les modules sécants d'élasticité sous tension à 10 % d'allongement Mt, Mj satisfaisant la relation Mt/Mj ≥ 1.

Au sens de l'invention, une armature de carcasse radiale signifie que les éléments de renforcement des couches d'armature de carcasse sont dans un plan formant un angle avec un plan radial inférieur ou égal à 10°, les deux plans étant sécants selon un axe perpendiculaire à l'axe de rotation.

La force rupture par unité de largeur d'une couche d'éléments de renforcement et la rigidité par unité de largeur d'une couche d'éléments de renforcement sont déterminée à partir des mesures effectuées sur les éléments de renforcement et de la densité d'éléments de renforcement de la couche, elle-même définie par le nombre d'éléments de renforcement par unité de largeur.

La mesure de densité s'effectue en comptant visuellement le nombre de fils présents sur un échantillon de tissu non déformé d'une largeur de 10 cm. Le nombre de fils comptés est directement la valeur de densité du tissu en fils/dm. La mesure est effectuée dans la zone du bourrelet du pneumatique, radialement à l'intérieur de la tringle.

En ce qui concerne les fils ou câbles textiles, les propriétés mécaniques sont mesurées sur des fibres ayant été soumises à un conditionnement préalable. Par "conditionnement préalable", on entend le stockage des fibres pendant au moins 48 heures, avant mesure, dans une atmosphère standard selon la norme européenne NF EN ISO 139 (température de 20 +/- 2°C ; hygrométrie relative de 65 +/- 4%HR). Les propriétés mécaniques en extension (Force à la rupture, allongements sous charge) sont mesurées suivant une méthode de mesure spécifique à l'aide de machines de traction statique étalonnées de marque INSTRON ou ZWICK. Les fils subissent une traction sur une longueur initiale entre mâchoires de 400 mm à une vitesse nominale de 200 mm/min. L'expression des résultats d'essai dépend du fil testé : le résultat d'essai peut être soit une seule valeur individuelle soit la moyenne de 5 valeurs individuelles. La mesure de rigidité minimum est déterminée par la pente minimum de la courbe d'allongement entre 0 et 10 % sur un intervalle de 2%.

Les mesures de propriétés mécaniques des éléments de renforcement textiles sont réalisées sur pneumatique neuf.

Le pneumatique ainsi défini selon l'invention peut équiper des véhicules de type petit poids lourd et présente une masse réduite par rapport aux pneumatiques usuels avec des performances en termes d'endurance satisfaisantes par rapport à celles des pneumatiques plus usuels lors de roulages dans des conditions très sévères en termes de surcharge. Le pneumatique selon l'invention permet par ailleurs de concevoir des pneumatiques pouvant porter des charges plus importantes avec des performances en termes d'endurance satisfaisantes.

De préférence selon l'invention, dans un plan méridien, une unique couche d'éléments de renforcement est présente axialement entre la surface extérieure du pneumatique et le retournement de la première couche d'armature de carcasse dans une zone délimitée radialement vers l'extérieur par la direction axiale passant l'extrémité du retournement de la première couche d'armature de carcasse et radialement vers l'intérieur par la direction axiale passant par l'intersection de la droite passant par le centre O de la courbure de la zone du pneumatique venant en appui sur le crochet de la jante, destinée à recevoir le pneumatique, et formant un angle de 45° avec la direction axiale et le retournement de la première couche d'armature de carcasse.

Pour former une couche d'armature de carcasse il est usuel de souder les extrémités de l'élément semi fini qui la constitue. Il est également usuel de former un recouvrement entre les deux extrémités pour renforcer ladite soudure. Au sens de l'invention, la zone de recouvrement forme une seule et unique couche bien que l'on trouve deux épaisseurs de ladite couche.

L'utilisation de deux couches d'éléments de renforcement en textile réalisées conformément à l'invention pour constituer la carcasse permet, tout en satisfaisant les critères de conception de tels pneumatiques que sont notamment les performances en matière d'endurance, du fait des matériaux et de la structure du pneumatique de proposer un pneumatique plus léger que les pneumatiques usuels. En effet, les inventeurs ont notamment su mettre en évidence que le choix de deux couches d'éléments de renforcement textiles pour former l'armature de carcasse du pneumatique conformément à ce que propose l'invention conduit à une structure de pneumatique plus souple que celle des pneumatiques usuels et autorise ainsi une réalisation du bourrelet plus légère. Il est en effet usuel pour permettre une endurance satisfaisante de tels pneumatiques de rigidifier la zone basse du pneumatique ; cela se traduit habituellement par des épaisseurs de bourrelet relativement importantes qui alourdissent notablement le pneumatique.

En outre, les pneumatiques usuels qui comportent le plus souvent une armature de carcasse métallique voient leur performance en termes d'endurance fortement altérée lors d'une utilisation en forte surcharge. En effet, les flèches imposées lors de telles surcharges provoquent un endommagement de la structure métallique de l'armature de carcasse. La structure plus souple des couches d'armature de carcasse textile favorise les performances d'endurance lors de tels usages.

Par ailleurs, le pneumatique selon l'invention qui ne comporte qu'une couche d'armature de carcasse retournée autour des tringles améliore les résultats en termes d'endurance du fait de l'absence de plusieurs extrémités de couches proches les unes des autres dans la zone du bourrelet qui vient prendre appui sur le crochet de jante.

Les valeurs de force rupture par unité de largeur supérieure à 2900 daN/dm de chacune des couches d'armature de carcasse permettent notamment la tenue du pneumatique à la pression de gonflage.

Les conditions de rigidité minimum par unité de la largeur, mesurée pour un allongement inférieur à 10%, entre les couches d'armature de carcasse permettent par ailleurs d'assurer une répartition de la reprise des efforts entre les couches d'armature de carcasse de sorte que la première couche d'armature de carcasse ne contribue pas à un trop grand cisaillement des mélanges caoutchouteux environnants dans la zone des bourrelets et nuise ainsi aux performances en termes d'endurance.

Avantageusement, la rigidité minimum par unité de largeur, mesurée pour un allongement inférieur à 10%, de la deuxième couche d'armature de carcasse est inférieure ou égale à une valeur égale à 100% de la rigidité minimum par unité de largeur, mesurée pour un allongement inférieur à 10%, de la première couche d'armature de carcasse pour encore optimiser les performances en termes d'endurance.

Le choix d'éléments de renforcement de la deuxième couche d'armature de carcasse présentant un allongement, sous une force de 20 daN, supérieur à 8% favorise encore les performances en termes d'endurance notamment du fait d'éléments de renforcement plus favorables pour résister au mise en compression lors du roulage du pneumatique, notamment lors d'utilisations en surcharges importantes qui imposent de fortes flèches de déformation du pneumatique.

Le choix des éléments de renforcement des deux couches d'armature de carcasse présentant un titre inférieur à 750 tex permet de contribuer à l'allégement du pneumatique par rapport aux pneumatiques usuels tout en assurant des performances des pneumatiques satisfaisantes notamment en termes d'endurance

Selon un mode de réalisation préféré de l'invention, les éléments de renforcement de la première couche d'armature de carcasse présentent un titre supérieur à 400 tex.

Selon une variante avantageuse de l'invention, les éléments de renforcement de la première couche d'armature de carcasse sont différents de ceux de la deuxième couche d'armature de carcasse.

Le choix de la relation Mt/Mj ≥ 1 satisfaite par les modules Mt et Mj contribue encore à favoriser les performances d'endurance du pneumatique.

Selon un mode de réalisation avantageux de l'invention, la deuxième couche d'armature de carcasse étant constituée d'éléments de renforcement entre deux couches de calandrage formées de mélange caoutchouteux présentant un module sécant d'élasticité sous tension à 10 % d'allongement Mc₂, les modules sécants d'élasticité sous tension à 10 % d'allongement Mc₂, Mj satisfont la relation 0.6 ≤ Mc₂/Mj ≤ 4 et de préférence, satisfont la relation Mc₂/Mj < 4.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Les mesures de propriétés mécaniques des éléments de renforcement textiles sont réalisées sur pneumatique neuf.

De telles relations entre les rigidités des couches de calandrage de la deuxième couche d'armature de carcasse et du premier élément de remplissage favorisent les performances d'endurance du pneumatique notamment en limitant les effets de cisaillements entre lesdits mélanges caoutchouteux.

Lorsque notamment le pneumatique est soumis à des conditions de roulage particulièrement sévères par exemple en termes de charge, les modules sécants d'élasticité sous tension à 10 % d'allongement Mc₂, Mj satisfont la relation 1 ≤ Mc₂/Mj.

Avantageusement encore selon l'invention, pour favoriser les performances d'endurance du pneumatique, les couches d'armature de carcasse étant constituées d'éléments de renforcement entre deux couches de calandrage formées de mélange caoutchouteux présentant un module sécant d'élasticité sous tension à 10 % d'allongement, respectivement notés Mc₁ pour la première couche d'armature de carcasse et Mc₂ pour la deuxième couche d'armature de carcasse, les modules sécants d'élasticité sous tension à 10 % d'allongement Mc₁, Mc₂ satisfont la relation Mc₂/Mc₁ ≤ 4.6.

Lorsque notamment le pneumatique est soumis à des conditions de roulage particulièrement sévères par exemple en termes de charge, les modules sécants d'élasticité sous tension à 10 % d'allongement Mc₁, Mc₂ satisfont la relation 1 ≤ Mc₂/Mc₁.

Selon un mode de réalisation préféré de l'invention, dans plan méridien, dans chaque bourrelet, le pneumatique comporte une couche d'éléments de renforcement en polyamide aromatique au contact de ladite première couche d'armature de carcasse sur toute sa longueur, au moins une partie étant radialement intérieure à la tringle et dont les extrémités sont radialement extérieures au centre géométrique de la tringle et ladite première couche d'armature de carcasse étant intercalée entre la tringle et la couche d'éléments de renforcement en polyamide aromatique.

Une telle couche d'éléments de renforcement en polyamide aromatique permet lors de roulages prolongés de préserver la première couche d'armature de carcasse qui est soumise au niveau du bourrelet et notamment sous la tringle à des élévations de température conséquentes, ses éléments de renforcement subissant des phénomènes de striction. En effet, la couche d'éléments de renforcement en polyamide aromatique forme tout d'abord une protection thermique pour la première couche d'armature de carcasse et en outre du fait de l'absence de sensibilité des éléments de renforcement en polyamide aromatique à la température et de leur grande rigidité, elle protège les éléments de renforcement de la première couche d'armature de carcasse des phénomènes de striction.

La couche d'éléments de renforcement en polyamide aromatique favorise ainsi encore les performances d'endurance du pneumatique, notamment lors de roulages prolongés. En outre, elle est également favorable pour limiter encore les risques de dégradation du pneumatique lors de roulage en surcharge et notamment les risques de déroulement de la première couche d'armature de carcasse.

Une variante de réalisation de l'invention prévoit encore, dans tout plan méridien, dans chaque bourrelet, que le pneumatique comporte une armature de contention entourant la tringle et un volume de mélange caoutchouteux directement au contact de la tringle. Avantageusement, l'armature de contention est une couche d'éléments de renforcement constitués de fibres en polyamide aliphatique, orientés sensiblement radialement. Une telle armature de contention est par exemple décrite dans le brevet EP 2370275.

Une telle couche de contention entourant la tringle et un volume de mélange caoutchouteux directement au contact de la tringle favorise également les performances d'endurance du pneumatique notamment lorsque le pneumatique est soumis à des charges portées très importantes et/ou de fortes pressions de gonflage en limitant notamment les phénomènes d'indentation de la première couche d'armature de carcasse par la tringle.

Avantageusement selon l'invention, la tringle est de type TPFR de forme hexagonale.

Una variante avantageuse de l'invention prévoit encore pour le cas de roulage sous fortes charges que, la première couche d'armature de carcasse formant une partie principale entre les deux tringles et un retournement dans chacun des bourrelets, le retournement de la première couche d'armature de carcasse est distant de la partie principale d'une distance d comprise entre 0.5 et 3.2 mm sur une longueur d'au moins 15 mm.

Selon cette variante de réalisation de l'invention, le retournement de la première couche d'armature de carcasse est plaqué contre la partie principale de la première couche d'armature de carcasse. La deuxième couche d'armature de carcasse est de ce fait également rapprochée de la partie principale de la première couche d'armature de carcasse et ainsi éloignée de la zone du pneumatique venant en appui sur le crochet de jante ; elle est en conséquence moins sollicitée en compression lors du roulage. Les performances en termes d'endurance sont ainsi encore améliorées. En outre, ce type de conception est également favorable pour lutter contre les risques de déroulement de la première couche d'armature de carcasse, plus particulièrement lors de sollicitations excessives en cas de surcharge et/ou de fortes pressions de gonflage.

Selon une réalisation préférée de l'invention, la direction passant par le centre O de la courbure de la zone du pneumatique venant en appui sur le crochet de la jante destinée à recevoir le pneumatique et l'extrémité axialement extérieure de la couche d'éléments de renforcement en polyamide aromatique forme un angle α avec la direction axiale compris entre 0 et 45°.

De préférence également selon l'invention, la direction passant par le centre O de la courbure de la zone du pneumatique destiné venant en appui sur le crochet de la jante destinée à recevoir le pneumatique et l'extrémité axialement intérieure de la couche d'éléments de renforcement en polyamide aromatique forme un angle β avec la direction axiale compris entre 0 et 20°.

De tels positionnements des extrémités de la couche d'éléments de renforcement en polyamide aromatique favorisent encore les performances du pneumatique en termes d'endurance.

De préférence encore selon l'invention toujours en vue de performances d'endurance améliorées, dans tout plan méridien, dans chaque bourrelet, l'extrémité de la deuxième couche d'armature de carcasse est axialement extérieure au centre géométrique de la tringle et la direction passant par le centre géométrique de la tringle et l'extrémité de la deuxième couche d'armature de carcasse forme un angle θ avec la direction axiale inférieur à 50°.

Une variante avantageuse de 'invention prévoit encore que la distance entre l'extrémité de la deuxième couche d'armature de carcasse et l'extrémité axialement la plus extérieure de la couche d'éléments de renforcement en polyamide aromatique est supérieure à 5 mm. Avantageusement encore, le recouvrement entre la deuxième couche d'armature de carcasse et la couche d'éléments de renforcement en polyamide aromatique est d'au moins 5 mm.

D'autres détails et caractéristiques avantageux de l'invention ressortiront ci-après de la description des exemples de réalisation de l'invention en référence aux figures 1 à 4 qui représentent :
- figure 1, une représentation schématique d'une vue en coupe d'un bourrelet selon une première variante de réalisation d'un pneumatique selon l'invention,
- figure 2, une représentation schématique d'une vue en coupe d'un bourrelet selon une deuxième variante de réalisation d'un pneumatique selon l'invention,
- figure 3, une représentation schématique d'une vue en coupe d'un bourrelet selon une troisième variante de réalisation d'un pneumatique selon l'invention,
- figure 4, une représentation schématique d'une vue en coupe d'un bourrelet selon une quatrième variante de réalisation d'un pneumatique selon l'invention.

Les figures ne sont pas représentées à l'échelle pour en simplifier la compréhension.

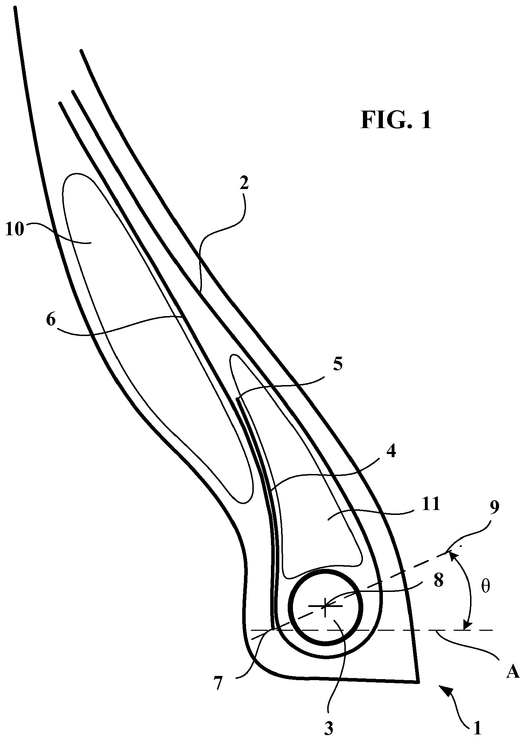

La figure 1 illustre une représentation schématique en coupe d'un bourrelet 1 d'un pneumatique de type petit poids lourd de dimension 7.50R16. Au niveau de ce bourrelet 1 du pneumatique on retrouve une partie de la première couche d'armature de carcasse 2 enroulée autour d'une tringle 3 pour former un retournement 4 présentant une extrémité 5. Est également représentée une partie de la deuxième couche d'armature de carcasse 6 dont l'extrémité 7 est axialement extérieure au centre géométrique 8 de la tringle 3.

L'angle θ formé par la direction 9, passant par le centre géométrique de la tringle et l'extrémité de la deuxième couche d'armature de carcasse, et la direction axiale A est égal à 30° et donc inférieur à 50°.

Les couches d'armature de carcasse 2 et 6 sont constituées d'éléments de renforcement entre deux couches de calandrage formées de mélange caoutchouteux présentant des modules sécants d'élasticité sous tension à 10 % d'allongement, respectivement notés Mc₁ pour la première couche d'armature de carcasse et Mc₂ pour la deuxième couche d'armature de carcasse.

Le module sécant d'élasticité sous tension à 10 % d'allongement Mc₁ de la première couche d'armature de carcasse 2 est égal à 3.3 MPa.

Le module sécant d'élasticité sous tension à 10 % d'allongement Mc₂ de la deuxième couche d'armature de carcasse 6 est égal à 12.5 MPa.

Le ratio Mc₂/Mc₁ est égal à 3.8 et donc bien inférieur à 4.6.

Sur cette figure 1, on peut encore observer un premier élément de remplissage 10, axialement intérieur au flanc et axialement extérieur au retournement de la première couche d'armature de carcasse 4, constitué de mélange caoutchouteux présentant un module sécant d'élasticité sous tension à 10 % d'allongement Mj égal à 7.8 MPa.

Le ratio Mc₂/Mj est égal à 1.6 et donc bien compris entre 0.6 et 4.

Le bourrelet 1 comporte encore un deuxième élément de remplissage 11 prolongeant radialement vers l'extérieur le noyau tringle, constitué de mélange caoutchouteux présentant un module sécant d'élasticité sous tension à 10 % d'allongement Mt égal à 7.8 MPa Le deuxième élément de remplissage 11 a, dans tout plan méridien, une section sensiblement triangulaire.

Le ratio Mt/Mj est égal à 1 et donc bien supérieur ou égal à 1.

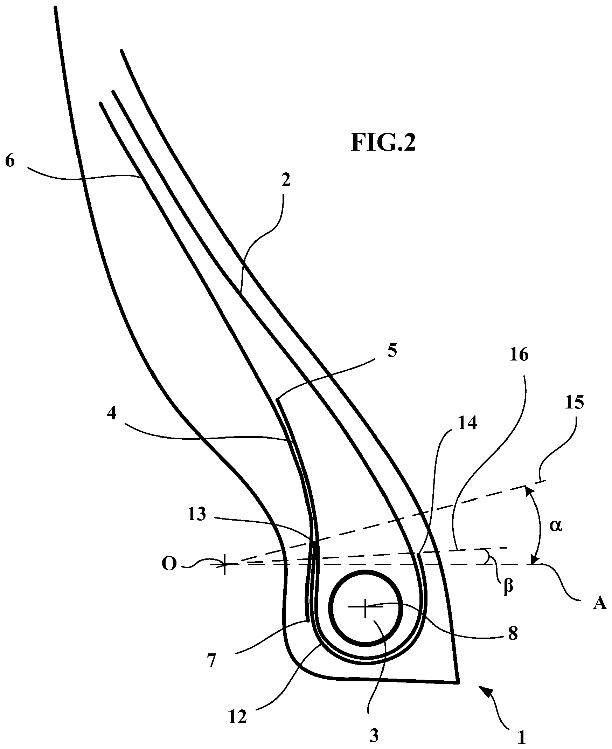

La figure 2 illustre une représentation schématique d'une vue en coupe d'un bourrelet 1 selon une deuxième variante de réalisation d'un pneumatique selon l'invention. Cette deuxième variante se distingue de la première variante illustrée sur la figure 1 par la présence d'une couche 12 d'éléments de renforcement en polyamide aromatique. Cette couche 12 d'éléments de renforcement en polyamide aromatique est disposée sur toute sa longueur au contact de ladite première couche d'armature de carcasse 2 de sorte qu'au moins une partie de la couche 12 est radialement intérieure à la tringle 3 et de sorte que les extrémités 13, 14 de la couche 12 sont radialement extérieures au centre géométrique de la tringle. Le positionnement de la couche12 est tel que la première couche d'armature de carcasse 2 est intercalée entre la tringle 3 et la couche 12 d'éléments de renforcement en polyamide aromatique.

L'angle α formé par la direction 15, passant par le centre O de la courbure du crochet de la jante destinée à recevoir le pneumatique et l'extrémité 13 axialement extérieure de la couche 12 d'éléments de renforcement en polyamide aromatique, et la direction axiale A est égal à 20°. L'angle α est donc compris entre 0 et 45°.

L'angle β formé par la direction 16, passant par le centre O de la courbure du crochet de la jante destinée à recevoir le pneumatique et l'extrémité 14 axialement intérieure de la couche 12 d'éléments de renforcement en polyamide aromatique, et la direction axiale A est égal à 10°. L'angle β est donc compris entre 0 et 20°.

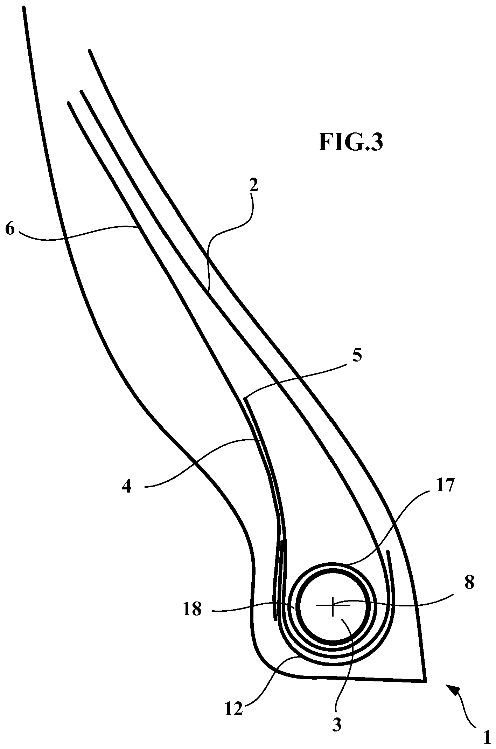

La figure 3 illustre une représentation schématique d'une vue en coupe d'un bourrelet 1 selon une troisième variante de réalisation d'un pneumatique selon l'invention. Cette troisième variante se distingue de la deuxième variante illustrée sur la figure 2 par la présence dans chaque bourrelet d'une armature de contention 17 entourant la tringle 3 et un volume de mélange caoutchouteux 18 directement au contact de la tringle.

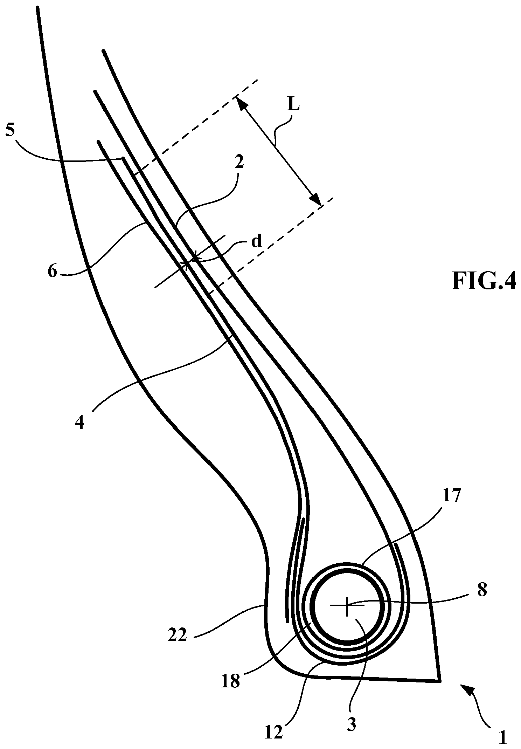

La figure 4 illustre une représentation schématique d'une vue en coupe d'un bourrelet 1 selon une quatrième variante de réalisation d'un pneumatique selon l'invention. Cette quatrième variante se distingue de la troisième variante illustrée sur la figure 3 par une extrémité 5 du retournement 4 de la première couche d'armature de carcasse 2 radialement plus éloignée de la tringle. En outre, selon cette quatrième variante de l'invention, le retournement 4 de la première couche d'armature de carcasse 2 est plaqué sur la partie principale de la première couche d'armature de carcasse 2. Ce placage se traduit par une distance d au plus égale à 1,9 mm sur une longueur L égale à 20 mm. Sur cette longueur de 20 mm la distance d varie entre 1.2 et 1.9 mm.

La distance d est mesurée entre la génératrice d'un élément de renforcement de la partie principale de la première couche d'armature de carcasse 2 et la génératrice d'un élément de renforcement retournement 4 de la première couche d'armature de carcasse 2 selon une direction normale aux surfaces de calandrage du retournement 4 et de la partie principale de la première couche d'armature de carcasse 2.

Des pneumatiques ont été réalisés avec des câbles PET (polyéthylène téréphtalate) de titre 334/2 pour la première couche d'armature de carcasse 2 et des câbles en polyamide aliphatique de titre 210/3 pour la deuxième couche d'armature de carcasse 6.

L'allongement des câbles en polyamide aliphatique de titre 210/3 est égal à 9.6 % et donc supérieur à 8 % sous une force 20 daN

La force rupture par unité de largeur de la première couche d'armature de carcasse est égale à 3280 daN/dm et donc supérieure à 2900 daN/dm. Elle est déterminée par le produit de la densité d'éléments de renforcement, égale à 80 fils/dm, et de la force rupture d'un élément de renforcement, égale à 41 daN.

La force rupture par unité de largeur de la deuxième couche d'armature de carcasse est égale à 4028 daN/dm et donc supérieure à 2900 daN/dm. Elle est déterminée par le produit de la densité d'éléments de renforcement, égale à 75 fils/dm, et de la force rupture d'un élément de renforcement, égale à 53.7 daN.

La rigidité minimum par unité de largeur, mesurée pour un allongement inférieur à 10%, de la première couche d'armature de carcasse est égale à 123 daN/dm/%. Elle est déterminée par le produit de la densité d'éléments de renforcement, égale à 80 fils/dm, et de la rigidité minimum d'un élément de renforcement, égale à 1.54 daN/%.

La rigidité minimum par unité de largeur, mesurée pour un allongement inférieur à 10%, de la deuxième couche d'armature de carcasse est égale à 55 daN/dm/%. Elle est déterminée par le produit de la densité d'éléments de renforcement, égale à 75 fils/dm, et de la rigidité minimum d'un élément de renforcement, égale à 0.73 daN/%.

La rigidité minimum par unité de largeur, mesurée pour un allongement inférieur à 10%, de la deuxième couche d'armature de carcasse est donc égale à une valeur égale à 45 % de la rigidité minimum par unité de largeur, mesurée pour un allongement inférieur à 10%, de la première couche d'armature de carcasse et donc strictement supérieure à une valeur égale à 20 % de la rigidité minimum par unité de largeur, mesurée pour un allongement inférieur à 10%, de la première couche d'armature de carcasse.

Des essais ont été réalisés avec des pneumatiques réalisés selon l'invention et d'autres avec des pneumatiques dits de référence.

Les pneumatiques selon l'invention qui sont testés sont conformes à la représentation de la figure 1.

Les pneumatiques de référence sont des pneumatiques usuels de même dimension comportant une seule couche d'armature de carcasse retournée autour d'une tringle semblable à la première couche d'armature de carcasse 2 représentée sur la figure 1 et comportant des câbles métalliques 12.18.

Des essais d'endurance ont été réalisés sur une machine de test imposant à chacun des pneumatiques un roulage ligne droite à une vitesse variant de 50 à 110 km/h (l'indice de vitesse prescrit du pneumatique est égal à 120 km/h) sous une charge variant entre la charge nominale et 1.9 fois la charge nominale et à des pressions de gonflage variant entre 0.7 fois et 1.1 fois la pression nominale.

Un seuil de kilométrage réalisé est défini pour considérer les pneumatiques comme étant suffisamment endurant.

L'ensemble des pneumatiques testé à satisfait ce test en dépassant le seuil fixé.

Les pneumatiques selon l'invention conduisent donc à des performances notamment en termes d'endurance satisfaisantes.

La masse du pneumatique de référence est égale à 21.9 Kg.

La masse du pneumatique selon l'invention de la première série (câbles identiques dans les deux couches d'armature carcasse) est égale à 19.7 Kg.

La masse du pneumatique selon l'invention de la deuxième série (câbles différents dans les deux couches d'armature carcasse) est égale à 19.7 Kg.

## Revendications

1. Pneumatique à armature de carcasse radiale, présentant un load index supérieur ou égal à 118, comprenant une armature de sommet, elle-même coiffée radialement d'une bande de roulement, ladite bande de roulement étant réunie à deux bourrelets (1), comportant une tringle (3), par l'intermédiaire de deux flancs, ladite armature de carcasse étant constituée de deux couches d'éléments de renforcement textiles (2, 6), une première couche d'armature de carcasse (2) étant retournée autour de la tringle (3) dans chacun des bourrelets (1), les extrémités (5) de ladite première couche d'armature de carcasse (2) étant radialement extérieure au point radialement le plus extérieur de la tringle (3) dans chaque bourrelet (1) et la deuxième couche d'armature de carcasse (6) s'étendant d'un bourrelet à l'autre, sans aucun retournement autour de la tringle dans chacun des bourrelets, ses extrémités (7) étant axialement extérieures au point axialement le plus extérieur de la tringle dans chaque bourrelet, ledit pneumatique comprenant dans chaque flanc un premier élément de remplissage (10), axialement intérieur à la surface extérieur d'un flanc et axialement extérieur au retournement (4) de la première couche d'armature de carcasse (2), constitué de mélange caoutchouteux présentant un module sécant d'élasticité sous tension à 10 % d'allongement Mj, chaque bourrelet (1) comprenant un deuxième élément de remplissage (11), constitué de mélange caoutchouteux présentant un module sécant d'élasticité sous tension à 10 % d'allongement Mt, prolongeant radialement vers l'extérieur le noyau tringle, **caractérisé en ce que** chacune des couches d'armature de carcasse (2, 6) présente une force rupture par unité de largeur supérieure à 2900 daN/dm, **en ce que** la rigidité minimum par unité de la largeur, mesurée pour un allongement inférieur à 10%, de la deuxième couche d'armature de carcasse (6) est strictement supérieure à une valeur égale à 20% de la rigidité minimum par unité de largeur, mesurée pour un allongement inférieur à 10%, de la première couche d'armature de carcasse, la mesure de rigidité minimum étant déterminée par la pente minimum de la courbe d'allongement entre 0 et 10% sur un intervalle de 2%, **en ce que** les éléments de renforcement de la première couche d'armature de carcasse (2) présentent un titre supérieur à 300 tex, **en ce que** les éléments de renforcement des deux couches d'armature de carcasse présentent un titre inférieur à 750 tex, **en ce que** l'allongement des éléments de renforcement de la deuxième couche d'armature de carcasse (6) est supérieure à 8 % sous une force 20 daN et **en ce que** les modules sécants d'élasticité sous tension à 10 % d'allongement Mt, Mj satisfont la relation Mt/Mj ≥ 1.

2. Pneumatique selon la revendication 1, **caractérisé en ce que,** dans un plan méridien, une unique couche d'éléments de renforcement est présente axialement entre la surface extérieure du pneumatique et le retournement (4) de la première couche d'armature de carcasse (2) dans une zone délimitée radialement vers l'extérieur par la direction axiale passant l'extrémité (5) du retournement (4) de la première couche d'armature de carcasse (2) et radialement vers l'intérieur par la direction axiale passant par l'intersection de la droite passant par le centre O de la courbure de la zone du pneumatique venant en appui sur le crochet de la jante, destinée à recevoir le pneumatique, et formant un angle de 45° avec la direction axiale et le retournement de la première couche d'armature de carcasse.

3. Pneumatique selon l'une des revendications 1 ou 2, **caractérisé en ce que** les éléments de renforcement de la première couche d'armature de carcasse (2) sont différents de ceux de la deuxième couche d'armature de carcasse.

4. Pneumatique selon l'une des revendications précédentes, la deuxième couche d'armature de carcasse (6) étant constituée d'éléments de renforcement entre deux couches de calandrage formées de mélange caoutchouteux présentant un module sécant d'élasticité sous tension à 10 % d'allongement Mc₂, **caractérisé en ce que** les modules sécants d'élasticité sous tension à 10 % d'allongement Mc₂, Mj satisfont la relation 0.6 ≤ Mc₂/Mj ≤ 4 et de préférence, satisfont la relation Mc₂/Mj < 4.

5. Pneumatique selon l'une des revendications précédentes, les couches d'armature de carcasse (2, 6) étant constituées d'éléments de renforcement entre deux couches de calandrage formées de mélange caoutchouteux présentant un module sécant d'élasticité sous tension à 10 % d'allongement, respectivement notés Mc₁ pour la première couche d'armature de carcasse (2) et Mc₂ pour la deuxième couche d'armature de carcasse (6), **caractérisé en ce que,** les modules sécants d'élasticité sous tension à 10 % d'allongement Mc₁, Mc₂ satisfont la relation Mc₂/Mc1≤ 4.6.

6. Pneumatique selon l'une des revendications précédentes, **caractérisé en ce que,** dans plan méridien, dans chaque bourrelet (1), le pneumatique comporte une couche d'éléments de renforcement en polyamide aromatique (12) au contact de ladite première couche d'armature de carcasse (2) sur toute sa longueur, au moins une partie étant radialement intérieure à la tringle (3) et dont les extrémités (13, 14) sont radialement extérieures au centre géométrique (8) de la tringle (3) et **en ce que** ladite première couche d'armature de carcasse (2) est intercalée entre la tringle (3) et la couche d'éléments de renforcement en polyamide aromatique 12).

7. Pneumatique selon l'une des revendications précédentes, **caractérisé en ce que,** dans tout plan méridien, dans chaque bourrelet (1), le pneumatique comporte une armature de contention (17) entourant la tringle (3) et un volume de mélange caoutchouteux (18) directement au contact de la tringle.

8. Pneumatique selon l'une des revendications précédentes, la première couche d'armature de carcasse (2) formant une partie principale entre les deux tringles (3) et un retournement (4) dans chacun des bourrelets (1), **caractérisé en ce que,** dans tout plan méridien, dans chaque bourrelet, le retournement (4) de la première couche d'armature de carcasse (2) est distant de la partie principale d'une distance d comprise entre 0.5 et 3.2 mm sur une longueur (L) d'au moins 15 mm.

9. Pneumatique selon l'une des revendications 6 à 8, **caractérisé en ce que,** la direction (15) passant par le centre O de la courbure de la zone du pneumatique venant en appui sur le crochet de la jante, destinée à recevoir le pneumatique, et l'extrémité (13) axialement extérieure de la couche d'éléments de renforcement en polyamide aromatique (12) forme un angle α avec la direction axiale compris entre 0 et 45°.

10. Pneumatique selon l'une des revendications 6 à 9, **caractérisé en ce que** la direction (16) passant par le centre O de la courbure de la zone du pneumatique venant en appui sur le crochet de la jante, destinée à recevoir le pneumatique, et l'extrémité (14) axialement intérieure de la couche d'éléments de renforcement en polyamide aromatique (12) forme un angle β avec la direction axiale compris entre 0 et 20°.

11. Pneumatique selon l'une des revendications précédentes, **caractérisé en ce que,** dans tout plan méridien, dans chaque bourrelet (1), l'extrémité (7) de la deuxième couche d'armature de carcasse (6) est axialement extérieure au centre géométrique (8) de la tringle (3) et **en ce que** la direction (9) passant par le centre géométrique (8) de la tringle (3) et l'extrémité (7) de la deuxième couche d'armature de carcasse (6) forme un angle θ avec la direction axiale inférieur à 50°.

12. Pneumatique selon l'une des revendications 6 à 11, **caractérisé en ce que** la distance entre l'extrémité (7) de la deuxième couche d'armature de carcasse (6) et l'extrémité (13) axialement la plus extérieure de la couche d'éléments de renforcement en polyamide (12) aromatique est supérieure à 5 mm.

13. Utilisation d'un pneumatique tel que décrit selon l'une des revendications 1 à 12 pour un véhicule de type petit poids lourd.

## Patentansprüche

1. Reifen mit einer radialen Karkassenverstärkung, umfassend einen Load-Index größer oder gleich 118, umfassend eine Scheitelverstärkung, auf der selbst radial eine Lauffläche aufliegt, wobei die Lauffläche mit zwei Wülsten (1), umfassend ein Gestänge (3), über zwei Seitenflächen verbunden ist, wobei die Karkassenverstärkung von zwei Lagen von textilen Verstärkungselementen (2, 6) gebildet ist, wobei eine erste Karkassenverstärkungslage (2) um das Gestänge (3) in jedem der Wülste (1) umgeschlagen ist, wobei die Enden (5) der ersten Karkassenverstärkungslage (2) radial außerhalb des radial äußersten Punktes des Gestänges (3) in jedem Wulst (1) ist, und sich die zweite Karkassenverstärkungslage (6) von einem Wulst zum anderen ohne ein Umschlagen um das Gestänge in jedem der Wülste erstreckt, wobei ihre Enden (7) axial außerhalb des axial äußersten Punktes des Gestänges in jedem Wulst sind, wobei der Reifen in jeder Seitenfläche ein erstes Füllelement (10) axial innerhalb der Außenfläche einer Seitenfläche und axial außerhalb des Umschlags (4) der ersten Karkassenverstärkungslage (2) umfasst, das von einem Kautschukgemisch gebildet ist, das ein Sekantenmodul mit einer Elastizität unter Spannung bei 10 % Dehnung Mj aufweist, wobei jeder Wulst (1) ein zweites Füllelement (11) umfasst, das von einem Kautschukgemisch gebildet ist, das ein Sekantenmodul mit einer Elastizität unter Spannung bei 10 % Dehnung Mt aufweist, das den Gestängekern nach außen radial verlängert, **dadurch gekennzeichnet, dass** jede der Karkassenverstärkungslagen (2, 6) eine Bruchkraft pro Breiteneinheit über 2900 daN/dm aufweist, dass die Mindeststeifigkeit pro Breiteneinheit, gemessen für eine Dehnung unter 10 %, der zweiten Karkassenverstärkungslage (6) unbedingt größer als ein Wert gleich 20 % der Mindeststeifigkeit pro Breiteneinheit ist, gemessen für eine Dehnung unter 10 % der ersten Karkassenverstärkungslage, wobei das Maß der Mindeststeifigkeit durch das Mindestgefälle der Dehnungskurve zwischen 0 und 10 % auf einem Intervall von 2 % bestimmt wird, dass die Verstärkungselemente der ersten Karkassenverstärkungslage (2) einen Titer über 300 tex aufweisen, dass die Verstärkungselemente der zwei Karkassenverstärkungslagen einen Titer unter 750 tex aufweisen, dass die Dehnung der Verstärkungselemente der zweiten Karkassenverstärkungslage (6) größer als 8 % unter einer Kraft von 20 daN ist, und dass die Sekantenmodule mit einer Elastizität unter Spannung bei 10 % Dehnung Mt, Mj dem Verhältnis Mt/Mj ≥ 1 entsprechen.

2. Reifen nach Anspruch 1, **dadurch gekennzeichnet, dass** in einer Mittelebene eine einzige Lage von Verstärkungselementen axial zwischen der Außenfläche des Reifens und dem Umschlag (4) der ersten Karkassenverstärkungslage (2) in einer Zone vorhanden ist, die radial nach außen durch die Axialrichtung begrenzt ist, die durch das Ende (5) des Umschlags (4) der ersten Karkassenverstärkungslage (2) verläuft, und radial nach innen durch die Axialrichtung, die durch den Schnittpunkt der Geraden verläuft, durch den Mittelpunkt O der Krümmung der Zone des Reifens verläuft, der auf dem Felgenhaken aufliegt, die dazu bestimmt ist, den Reifen aufzunehmen, und einen Winkel von 45° mit der Axialrichtung und dem Umschlag der ersten Karkassenverstärkungslage bildet.

3. Reifen nach einem der Ansprüche 1 oder 2, **dadurch gekennzeichnet, dass** die Verstärkungselemente der ersten Karkassenverstärkungslage (2) zu jenen der zweiten Karkassenverstärkungslage unterschiedlich sind.

4. Reifen nach einem der vorhergehenden Ansprüche, wobei die zweite Karkassenverstärkungslage (6) von Verstärkungselementen zwischen zwei Kalanderlagen gebildet ist, die von einem Kautschukgemisch gebildet sind, das ein Sekantenmodul mit einer Elastizität unter Spannung bei 10 % Dehnung Mc₂ aufweist, **dadurch gekennzeichnet, dass** die Sekantenmodule mit einer Elastizität unter Spannung bei 10 % Dehnung Mc₂, Mj dem Verhältnis 0,6 ≤ Mc₂/Mj ≤ 4 und vorzugsweise dem Verhältnis Mc₂/Mj < 4 entsprechen.

5. Reifen nach einem der vorhergehenden Ansprüche, wobei die Karkassenverstärkungslagen (2, 6) von Verstärkungselementen zwischen zwei Kalanderlagen gebildet sind, die von einem Kautschukgemisch gebildet sind, das ein Sekantenmodul mit einer Elastizität unter Spannung bei 10 % Dehnung, mit Mc₁ für die erste Karkassenverstärkungslage (2) und Mc₂ für die zweite Karkassenverstärkungslage (6) bezeichnet, aufweist, **dadurch gekennzeichnet, dass** die Sekantenmodule mit einer Elastizität unter Spannung bei 10 % Dehnung Mc₁, Mc₂ dem Verhältnis Mc₂/Mc₁ ≤ 4,6 entsprechen.

6. Reifen nach einem der vorhergehenden Ansprüche, **dadurch gekennzeichnet, dass** in der Mittelebene der Reifen in jedem Wulst (1) eine Lage von Verstärkungselementen aus aromatischem Polyamid (12) umfasst, die mit der ersten Karkassenverstärkungslage (2) über ihre gesamte Länge in Kontakt ist, wobei mindestens ein Teil radial innerhalb des Gestänges (3) ist, und deren Enden (13, 14) radial außerhalb des geometrischen Mittelpunktes (8) des Gestänges (3) sind, und dass die erste Karkassenverstärkungslage (2) zwischen dem Gestänge (3) und der Lage von Verstärkungselementen aus aromatischem Polyamid (12) zwischengefügt ist.

7. Reifen nach einem der vorhergehenden Ansprüche, **dadurch gekennzeichnet, dass** in jeder Mittelebene in jedem Wulst (1) der Reifen eine Eingrenzungsverstärkung (17) umfasst, die das Gestänge (3) und ein Volumen von Kautschukgemisch (18), das direkt mit dem Gestänge in Kontakt ist, umgibt.

8. Reifen nach einem der vorhergehenden Ansprüche, wobei die erste Karkassenverstärkungslage (2) einen Hauptteil zwischen den zwei Gestängen (3) und einem Umschlag (4) in jedem der Wülste (1) bildet, **dadurch gekennzeichnet, dass** in jeder Mittelebene in jedem Wulst der Umschlag (4) der ersten Karkassenverstärkungslage (2) von dem Hauptteil um einen Abstand d zwischen 0,5 und 3,2 mm auf einer Länge (L) von mindestens 15 mm entfernt ist.

9. Reifen nach einem der Ansprüche 6 bis 8, **dadurch gekennzeichnet, dass** die Richtung (15), die durch den Krümmungsmittelpunkt O der Zone des Reifens, die auf dem Felgenhaken aufliegt, die dazu bestimmt ist, den Reifen aufzunehmen, und das axial äußere Ende (13) der Lage von Verstärkungselementen aus aromatischem Polyamid (12) verläuft, einen Winkel α mit der Axialrichtung zwischen 0 und 45° bildet.

10. Reifen nach einem der Ansprüche 6 bis 9, **dadurch gekennzeichnet, dass** die Richtung (16), die durch den Krümmungsmittelpunkt O der Zone des Reifens, die auf dem Felgenhaken aufliegt, die dazu bestimmt ist, den Reifen aufzunehmen, und das axial innere Ende (14) der Lage von Verstärkungselementen aus aromatischem Polyamid (12) verläuft, einen Winkel β mit der Axialrichtung zwischen 0 und 20° bildet.

11. Reifen nach einem der vorhergehenden Ansprüche, **dadurch gekennzeichnet, dass** in jeder Mittelebene, in jedem Wulst (1) das Ende (7) der zweiten Karkassenverstärkungslage (6) axial außerhalb des geometrischen Mittelpunkts (8) des Gestänges (3) ist, und dass die Richtung (9), die durch den geometrischen Mittelpunkt (8) des Gestänges (3) und das Ende (7) der zweiten Karkassenverstärkungslage (6) verläuft, einen Winkel θ mit der Axialrichtung unter 50° bildet.

12. Reifen nach einem der Ansprüche 6 bis 11, **dadurch gekennzeichnet, dass** der Abstand zwischen dem Ende (7) der zweiten Karkassenverstärkungslage (6) und dem axial äußersten Ende (13) der Lage von Verstärkungselementen (12) aus aromatischem Polyamid größer als 5 mm ist.

13. Verwendung eines Reifens, wie in einem der Ansprüche 1 bis 12 beschrieben, für ein Fahrzeug vom Typ Klein-LKW.

## Claims

1. Tyre with radial carcass reinforcement, having a load index higher than or equal to 118, comprising a crown reinforcement, itself capped radially by a tread, the said tread being connected to two beads (1), comprising a bead wire (3), by two sidewalls, the said carcass reinforcement being made up of two layers of textile reinforcing elements (2, 6), a first layer of carcass reinforcement (2) being turned up around the bead wire (3) in each of the beads (1), the ends (5) of the said first layer of carcass reinforcement (2) being radially on the outside of the radially outermost point of the bead wire (3) in each bead (1) and the second layer of carcass reinforcement (6) extending from one bead to the other without any turnup around the bead wire in each of the beads, its ends (7) being axially on the outside of the axially outermost point of the bead wire in each bead, the said tyre comprising in each sidewall a first filling element (10), axially on the inside of the exterior surface of a sidewall and axially on the outside of the turnup (4) of the first layer of carcass reinforcement (2), and made of a rubber compound having a secant elastic modulus under tension at 10% elongation of Mj, each bead (1) comprising a second filling element (11) made of a rubber compound having a secant elastic modulus under tension at 10% elongation of Mt, extending the bead wire core radially towards the outside, **characterized in that** each of the layers of carcass reinforcement (2, 6) has a breaking force per unit width higher than 2900 daN/dm, **in that** the minimum strength per unit width, measured for an elongation of less than 10%, of the second layer of carcass reinforcement (6) is strictly greater than a value equal to 20% of the minimum strength per unit width, measured for an elongation of less than 10%, of the first layer of carcass reinforcement, the minimum strength measurement being determined by the minimum gradient of the elongation curve between 0 and 10% over a range of 2%, **in that** the reinforcing elements of the first layer of carcass reinforcement (2) have a thread count higher than 300 tex, **in that** the reinforcing elements of the two layers of carcass reinforcement have a thread count of less than 750 tex, **in that** the elongation of the reinforcing elements of the second layer of carcass reinforcement (6) is greater than 8% under a force of 20 daN and **in that** the secant elastic modulus values under tension at 10% elongation, Mt, Mj, satisfy the relationship Mt/Mj ≥ 1.

2. Tyre according to Claim 1, **characterized in that,** in a meridian plane, a single layer of reinforcing elements is present axially between the exterior surface of the tyre and the turnup (4) of the first layer of carcass reinforcement (2) in a zone delimited radially towards the outside by the axial direction passing through the end (5) of the turnup (4) of the first layer of carcass reinforcement (2) and radially towards the inside by the axial direction passing through the intersection of the straight line passing through centre O of curvature of the zone of the tyre that comes to bear on the rim flange, intended to accept the tyre, and making an angle of 45° with the axial direction and the turnup of the first layer of carcass reinforcement.

3. Tyre according to one of Claims 1 and 2, **characterized in that** the reinforcing elements of the first layer of carcass reinforcement (2) are different from those of the second layer of carcass reinforcement.

4. Tyre according to one of the preceding claims, the second layer of carcass reinforcement (6) being made up of reinforcing elements between two skim layers formed of rubber compound having a secant elastic modulus under tension at 10% elongation of Mc₂, **characterized in that** the secant elastic modulus values under tension at 10% elongation, Mc₂, Mj, satisfy the relationship 0.6 ≤ Mc₂/Mj ≤ 4 and preferably satisfy the relationship Mc₂/Mj < 4.

5. Tyre according to one of the preceding claims, the layers of carcass reinforcement (2, 6) being made up of reinforcing elements between two skim layers formed of rubber compound having a secant elastic modulus under tension at 10% elongation, denoted Mc₁ for the first layer of carcass reinforcement (2) and Mc₂ for the second layer of carcass reinforcement (6) respectively, **characterized in that** the secant elastic modulus values under tension at 10% elongation Mc₁, Mc₂ satisfy the relationship Mc₂/Mc1 ≤ 4.6.

6. Tyre according to one of the preceding claims, **characterized in that,** in a meridian plane, in each bead (1), the tyre comprises a layer of reinforcing elements made of aromatic polyamide (12) in contact with the said first layer of carcass reinforcement (2) over the entire length thereof, at least a part being radially on the inside of the bead wire (3) and of which the ends (13, 14) are radially on the outside of the geometric centre (8) of the bead wire (3) and **in that** the said first layer of carcass reinforcement (2) is interposed between the bead wire (3) and the layer of reinforcing elements made of aromatic polyamide (12).

7. Tyre according to one of the preceding claims, **characterized in that,** in any meridian plane, in each bead (1), the tyre comprises a retention reinforcement (17) surrounding the bead wire (3) and a volume of rubber compound (18) directly in contact with the bead wire.

8. Tyre according to one of the preceding claims, the first layer of carcass reinforcement (2) forming a main part between the two bead wires (3) and a turnup (4) in each of the beads (1), **characterized in that,** in any meridian plane, in each bead, the turnup (4) of the first layer of carcass reinforcement (2) is distant from the main part by a distance d of between 0.5 and 3.2 mm over a length (L) of at least 15 mm.

9. Tyre according to one of Claims 6 to 8, **characterized in that** the direction (15) passing through the centre O of curvature of the zone of the tyre that comes to bear against the flange of the rim intended to accept the tyre, and the axially external end (13) of the layer of reinforcing elements made of aromatic polyamide (12) makes an angle α of between 0 and 45° with the axial direction.

10. Tyre according to one of Claims 6 to 9 **characterized in that** the direction (16) passing through the centre O of curvature of the zone of the tyre that comes to bear against the flange of the rim intended to accept the tyre and the axially interior end (14) of the layer of reinforcing elements made of aromatic polyamide (12) makes an angle β of between 0 and 20° with the axial direction.

11. Tyre according to one of the preceding claims, **characterized in that,** in any meridian plane, in each bead (1), the end (17) of the second layer of carcass reinforcement (6) is axially on the outside of the geometric centre (8) of the bead wire (3), and **in that** the direction (9) passing through the geometric centre (8) of the bead wire (3) and the end (7) of the second layer of carcass reinforcement (6) makes an angle θ of less than 50° with the axial direction.

12. Tyre according to one of Claims 6 to 11, **characterized in that** the distance between the end (7) of the second layer of carcass reinforcement (6) and the axially outermost end (13) of the layer of reinforcing elements made of aromatic polyamide (12) is greater than 5 mm.

13. Use of a tyre as described in one of Claims 1 to 12 for a vehicle of light truck type.
